# FASCICULE DE BREVET EUROPEEN

(11) **EP 1 931 019 B1**
(45) Date de publication et mention de la délivrance du brevet: **11.08.2010**
(21) Numéro de dépôt: 07122147.7
(22) Date de dépôt: 03.12.2007
(51) Int. Cl.: H02M 3/07

(54) **Convertisseur DC DC elevateur de tension**
Gleichstromwandler und -Spannungsverstärker
DC-DC step-up converter

(30) Priorité: 05.12.2006 FR 0610605
(43) Date de publication de la demande: 11.06.2008
(73) Titulaire: THALES, 92200 Neuilly sur Seine (FR)
(72) Inventeur: Taurand, Christophe, 26000 Valence (FR)
(74) Mandataire: Esselin, Sophie

(56) Documents cités:
- WO-A-2005/039033
- FR-A- 2 860 660

## Description

La présente invention concerne un convertisseur continu continu ou DC DC, du type élévateur de tension, permettant d'obtenir une tension continue de sortie de valeur plus élevée que la tension continue d'alimentation appliquée en entrée. Le domaine d'application concerne la conversion d'énergie à bas coût et hautes performances, en particulier à très haut rendement. De tels convertisseurs DC DC sont notamment utilisés dans le domaine de l'aéronautique pour générer des tensions électriques de niveau élevé, pour alimenter des dispositifs électroniques, à partir d'un générateur commun d'alimentation basse tension.

Un convertisseur DC DC élévateur de tension est un convertisseur à découpage non isolé, qui comprend une inductance d'entrée connectée entre une ligne d'alimentation en tension continue et la masse, à travers un interrupteur commandé, typiquement un transistor commandé en commutation, et un ou des étages d'élévation de tension.

Lorsque l'on cherche à obtenir des taux de conversion élevés, à la fois avec un fort rendement et une fiabilité et une durée de vie élevées, il est nécessaire de définir des topologies particulières, notamment pour gérer le stress dû aux tensions élevées et aux courants générés.

En outre dans certaines applications, comme en aéronautique, on cherche à obtenir une conversion d'énergie DC DC à bas coût et hautes performances, en particulier à très haut rendement, par exemple au moins égal à 5.

On connaît notamment du brevet français FR 2 860 660 délivré le 21 janvier 2006, des convertisseurs dont la topologie à groupes de condensateurs permet de répartir le stress sur les différents interrupteurs et d'obtenir des tensions très élevées, avec un rendement optimal. Dans un exemple pratique, on peut ainsi obtenir en sortie une tension de l'ordre de 270 volts, à partir d'une tension d'entrée de 12 volts, soit un rapport d'élévation largement supérieur à 5.

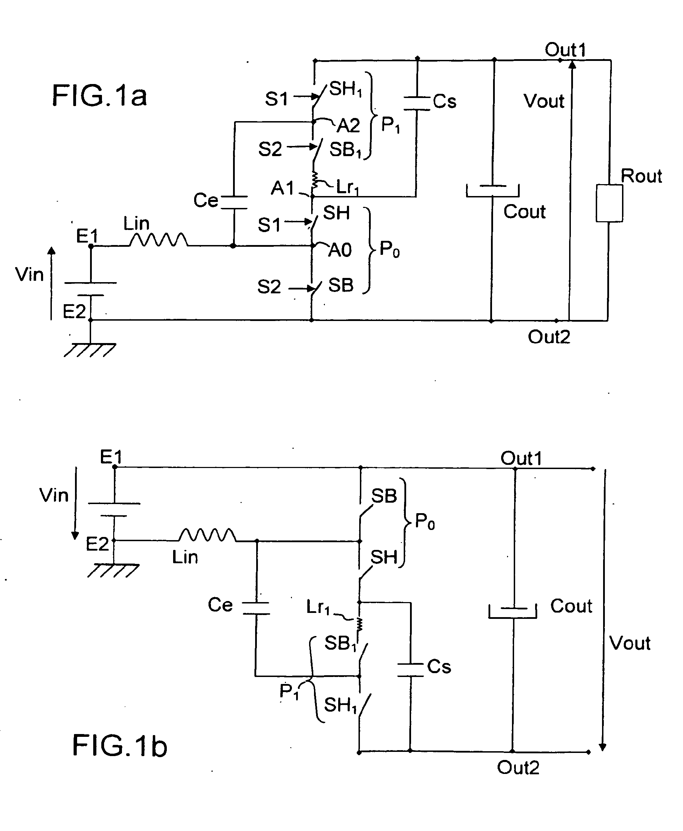

La structure d'un tel convertisseur élévateur de tension, pour fournir une tension positive élevée selon cet état de l'art est représentée sur la figure 1 a.

Un générateur fournit une tension continue Vin sur des bornes d'entrée E1 et E2 du convertisseur.

Le convertisseur comprend :
- une inductance d'entrée Lin connectée en série entre les bornes d'entrée E1 et E2 via un interrupteur SB, qui assure périodiquement la mise en parallèle de l'inductance d'entrée avec le générateur.
- un condensateur de sortie Cout connecté en parallèle sur des bornes de sortie Out1 et Out2.
- deux paires d'interrupteurs P₀ et P₁, associées à un condensateur d'entrée Ce et un condensateur de sortie Cs. En général Ce=Cs=C.

Plus précisément chaque paire comprend deux interrupteurs connectés en série. La paire P₀ comprend ainsi les interrupteurs SB et SH connectés en série entre la borne E2 et un noeud de connexion A₁. La paire P₁ comprend les interrupteurs SB₁ et SH₁ connectés en série entre le noeud de connexion A₁ et la borne de sortie Out1. Le condensateur de charge Ce est connecté en parallèle entre les noeuds de connexion A₀ et A₂ des interrupteurs des deux paires successives P₀ et P₁, A₀ étant le noeud de connexion entre les interrupteurs SB et SH de la paire P₀ et A₂, le noeud de connexion entre les interrupteurs SB₁ et SH₁ de la paire P₁.

Le condensateur de filtrage de sortie Cs est connecté en parallèle sur la deuxième paire P₁, entre le noeud A₁ et la borne Out1.

Le principe de fonctionnement est de manière succincte le suivant :

Les interrupteurs SB et SB₁, sont commandés par le même signal de contrôle S2 et les interrupteurs SH et SH₁, sont commandés par le même signal de contrôle S1. Les signaux de contrôle S1 et S2 sont tels que dans chaque paire, les interrupteurs sont commandés simultanément, l'un dans un état passant par l'application sur son entrée de commande d'un premier signal de commande S1, l'autre dans un état isolé par l'application à son entrée de commande d'un second signal de commande S2 complémentaire du premier. Les interrupteurs SB et SB₁ sont ainsi commandés à l'état passant (fermés) pendant un temps Ton et à l'état ouvert pendant un temps Toff, tandis que les interrupteurs SH et SH₁ sont commandés à l'état passant (fermés) pendant un temps Toff et à l'état ouvert pendant un temps Ton.

De préférence, une inductance de récupération Lr₁ est prévue en série avec l'interrupteur SB1 de la paire P₁, en sorte que le condensateur Ce est en parallèle sur l'ensemble série SH, SB₁, Lr₁. Cette inductance permet une amélioration du rendement du convertisseur. Dans ces conditions, pendant la période de conduction Ton des interrupteurs SB et SB₁ (interrupteurs SB et SB₁ fermés), commandée par un état actif du signal de contrôle S2, les interrupteurs SH et SH₁ sont ouverts. On a un circuit oscillant comprenant la capacité de sortie Cout en parallèle avec les deux capacités Ce et Cs en série avec l'inductance Lr₁ de récupération. L'inductance de récupération Lr₁ est calculée pour obtenir une résonance de ce circuit oscillant telle que : avec Ton=π.(Lr₁.C_{eq})^{½} où C_{eq} est la capacité équivalente du circuit oscillant soit C_{eq}=1/(1/Cout + 1/Ce + 1/Cs).

Pour un résultat optimal, Ton est constant et égal à environ la demi-période de la fréquence de résonance du circuit oscillant.

Lors du passage de Toff à Ton, le courant dans l'inductance Lr₁ est nul, la tension (Vce + Vcs) aux bornes des capacités Ce et Cs est inférieure à la valeur moyenne de Vout et croît en passant par la valeur moyenne de Vout. Le courant dans l'inductance Lr₁ augmente en emmagasinant de l'énergie magnétique, passe par une valeur maximum lorsque (Vce+Vcs) passe par la valeur moyenne de Vout, puis décroît jusqu'à une valeur nulle, correspondant à la fin de Ton, rendant l'énergie aux capacités Ce et Cs. Pendant Toff, le courant dans l'inductance Lr₁ reste nul, la somme des tensions (Vce+Vcs) décroît car Ce et Cs sont parcourues par le courant de l'inductance Lin, puis le cycle recommence au début de Ton.

La figure 1b représente la version "négative" du convertisseur élévateur de tension de la figure 1a, c'est à dire par lequel une tension négative élevée Vout est obtenue en sortie. Le convertisseur de la figure 1b, de même structure que celui de la figure 1a, est alimenté par un générateur E fournissant un potentiel Vin négatif entre les bornes E1 et E2 d'entrée. La polarité de la capacité de sortie Cout est alors inversée.

En pratique un tel convertisseur DC DC est performant et permet, en prévoyant une pluralité de paires Pᵢ d'interrupteurs similaires à P₁, chacune associée à une paire de condensateurs d'entrée et de sortie Ceᵢ, Csᵢ, d'obtenir le niveau de tension désiré en sortie, avec un rendement optimal, avec un stress réparti sur les différentes paires. On se reportera utilement au texte et aux figures du brevet précité.

Dans de nombreuses applications, des tensions élevées positives et négatives sont nécessaires. Ce problème pourrait être résolu par l'utilisation de deux structures de convertisseur à sortie mono-tension de l'état de l'art telles que décrites en relation avec les figures 1 a et 1 b, pour fournir l'une une tension élevée positive, l'autre une tension élevée négative, à partir de la même tension basse d'alimentation continue. Cette solution performante techniquement n'est cependant pas optimale en termes de complexité, chaque convertisseur à sortie mono-tension devant conserver son propre circuit de contrôle. Par rapport à un convertisseur mono-tension de même puissance, une structure à deux convertisseurs a un coût plus élevé et une fiabilité réduite.

L'invention est un perfectionnement du convertisseur décrit dans le brevet français précité.

Elle a pour objet une topologie d'un convertisseur DC DC à deux tensions de sortie, à haut rendement, permettant des rapports de conversion supérieur à 5, et optimisée en terme de place et de performances.

Telle que revendiquée, l'invention concerne donc un convertisseur DC DC élévateur de tension comportant une première et une deuxième bornes d'entrée pour recevoir une tension continue d'entrée, un étage inductif connecté entre les dites bornes d'entrée et comprenant une inductance connectée en un noeud en série avec un interrupteur et au moins une première et une deuxième structure d'élévation de tension, comprenant :
- au moins une première structure d'élévation pour fournir une tension de sortie positive entre une borne de sortie positive et une borne de sortie reliée à la masse électrique, ladite première structure étant connectée entre un noeud d'entrée formé par ledit noeud de l'étage inductif et ladite borne de sortie positive; et comprenant un premier interrupteur connecté au dit noeud d'entrée, et kₚ paires d'interrupteurs en série, connectées en série entre ledit premier interrupteur et la borne de sortie positive, kₚ entier supérieur ou égal à 1,
- au moins une deuxième structure d'élévation pour fournir une tension de sortie négative entre une borne de sortie négative et ladite borne de sortie reliée à la masse électrique, ladite deuxième structure étant connectée entre un noeud d'entrée formé par ledit noeud d'un étage translateur de niveau et ladite borne de sortie négative, et comprenant un premier interrupteur connecté au dit noeud d'entrée, et kₙ paires d'interrupteurs en série connectées en série entre ledit premier interrupteur et la borne de sortie négative, kₙ entier supérieur ou égal à 1, **caractérisé en ce qu**'il comprend en outre :
- le circuit translateur de niveau connecté entre ledit noeud de l'étage inductif et la borne d'entrée reliée à la masse électrique et comprenant une capacité connectée en série en un noeud à une diode connectée en direct ;

- kp+1, respectivement kₙ+1 condensateurs répartis entre un groupe de condensateur(s) d'entrée et un groupe de condensateur(s) de sortie, associés à chaque paire de la première structure, respectivement de la deuxième structure ;
- chaque paire d'interrupteurs desdites première et deuxième structure comprenant un premier interrupteur et un deuxième interrupteur en série, commandés simultanément et alternativement l'un à l'état ouvert et l'autre à l'état fermé, les premiers interrupteurs étant tels qu'à l'état fermé ils mettent en série un groupe de condensateur(s) d'entrée et un groupe de condensateur(s) de sortie correspondants, et les deuxièmes interrupteurs étant tels qu'à l'état fermé, les groupes de condensateur(s) d'entrée et de sortie sont connectés en parallèle entre le noeud d'entrée de la structure correspondante et la borne de tension positive ou négative correspondante ;
et l'interrupteur de l'étage inductif, le dit premier interrupteur de la deuxième structure, les dits premiers interrupteurs des paires de la première structure et les dits deuxièmes interrupteurs des paires de la deuxième structure étant simultanément commandés alternativement à l'état ouvert et fermé, et le dit premier interrupteur de la première structure, les dits deuxièmes interrupteurs des paires de la première structure et les dits premiers interrupteurs des paires de la deuxième structure étant simultanément commandés dans l'état opposé.

D'autres avantages et caractéristiques de l'invention sont détaillés dans la description suivante en référence aux dessins illustrés d'un mode de réalisation de l'invention, donné à titre d'exemple non limitatif. Dans ces dessins :
- Les figures 1a et 1b déjà décrites illustrent un convertisseur DC DC mono tension selon l'état de l'art, pour fournir une tension positive, respectivement négative ;
- La figure 2 illustre une topologie de convertisseur DC DC à deux sorties symétriques selon l'invention, à une paire d'interrupteurs supplémentaires pour chaque sortie de tension positive et négative ;
- La figure 3 illustre une variante, dans lesquels les interrupteurs sont réalisés par des diodes ;
- Les figures 4 et 5 illustrent les phases correspondantes à l'état ouvert respectivement fermé de l'interrupteur M ;
- La figure 6 illustre une topologie de convertisseur DC DC à deux sorties symétriques selon l'invention, à trois paires d'interrupteurs supplémentaires pour chaque sortie de tension positive et négative ;
- La figure 7 illustre une topologie de convertisseur DC DC à deux sorties non symétriques selon l'invention, à nombre de paires d'interrupteurs différents pour chaque sortie de tension positive et négative ;
- La figure 8 illustre une topologie correspondante de base, à une paire d'interrupteurs supplémentaire ;
- La figure 9 illustre un convertisseur multi-tension DC DC selon l'invention.

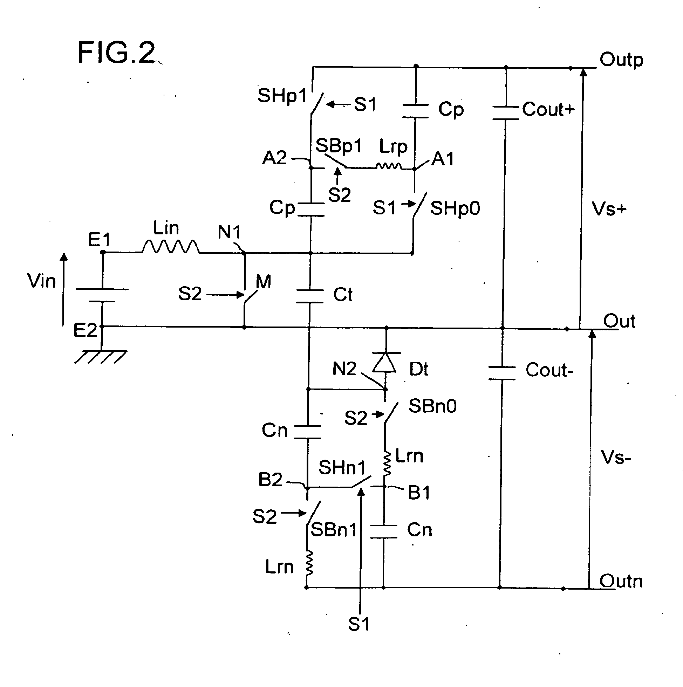

La figure 2 illustre une topologie de convertisseur de tension DC DC à deux sorties élevées et régulées, une sortie de tension positive Vs+ et une sortie de tension négative Vs-, avec une cellule du deuxième ordre capable d'élever une tension d'entrée Vin d'une valeur déterminée, en ces deux tensions de sortie. Dans un exemple pratique, on a pu réaliser un convertisseur de topologie correspondante, qui pour une tension d'entrée Vin entre 12 et 32 volts, délivre en sortie deux tensions de sortie régulées de plus et moins 125 volts.

Un générateur est connecté entre les bornes d'entrée E1 et E2 du convertisseur, pour appliquer une tension continue Vin à ses bornes. E2 est reliée à la masse électrique.

Le convertisseur comprend :
- un étage inductif d'entrée connecté en parallèle entre les bornes E1 et E2, comprenant une inductance d'entrée Lin en série avec un interrupteur commandé M. L'interrupteur M assure périodiquement la mise en parallèle de l'inductance d'entrée avec le générateur ;
- un premier condensateur de sortie Cout+ connecté en parallèle respectivement sur des bornes de sortie Outp et Out, fournissant à ses bornes une tension de sortie positive Vs+; la borne de sortie Out étant reliée avec la borne d'entrée E2 à la masse électrique ;
- un deuxième condensateur de sortie Cout- connecté en parallèle respectivement entre des bornes de sortie, Out et Outn, fournissant à ses bornes une tension de sortie négative Vs- ;
- un circuit de translation de niveau de tension, connecté en parallèle sur ledit interrupteur commandé M, entre un noeud de connexion N1 correspondant au point milieu entre l'inductance d'entrée et l'interrupteur commandé M, et la borne E2 reliée à la masse électrique. Ce circuit comprend un condensateur Ct et une diode Dt connectés en série; une borne du condensateur est connectée au noeud N1. La cathode de la diode Dt est connectée à la borne E2, les noeuds N1 et N2 formant respectivement un noeud d'entrée pour une structure d'élévation de tension positive, respectivement négative ;
- une structure d'élévation de tension positive, connectée entre le noeud d'entrée N 1 et la borne de sortie Outp ;
- une structure d'élévation de tension négative, connectée entre le noeud d'entrée N2 entre le condensateur et la diode du circuit de translation de niveau et la borne de sortie Outn.

Les interrupteurs sont typiquement réalisés par des transistors semi-conducteurs tel que par exemple, et non limitativement, des transistors MOS ou bipolaires.

Dans l'exemple illustré sur la figure 2, ces structures forment chacune une cellule d'élévation de tension du deuxième ordre, à trois interrupteurs et deux capacités élémentaires de même valeur, qui sont :
- soit en série entre le noeud d'entrée de la structure considérée et la borne de sortie non reliée à la masse, via un des interrupteurs à l'état fermé simultanément avec l'interrupteur M;
- soit en parallèle, les deux autres interrupteurs étant fermés et l'interrupteur M ouvert.

Plus précisément, la première structure qui fournit la tension de sortie positive Vs+ entre les bornes Outp et Out comprend :
- un premier interrupteur commandé SHp0, dont une borne est connectée au noeud d'entrée correspondant N1 de la structure, et une paire d'interrupteurs en série SBp1, SHp1. Cet ensemble est connecté en entrée à l'autre borne A1 du premier interrupteur SHp0 et en sortie à la borne de sortie Outp non reliée à la masse électrique ;
- une capacité élémentaire Cp connectée en série entre le point milieu A2 entre les deux interrupteurs de la paire SBp1, SHp1 et le noeud d'entrée N1 de la structure ; et une capacité élémentaire de même valeur Cp connectée en parallèle sur cette paire SBp1, SHp1, c'est à dire entre la borne de sortie Outp non reliée à la masse électrique et la borne A1 du premier interrupteur SHp0 ;
- le signal de contrôle S1 commande les interrupteurs SHp0 et SHp1 et le signal de contrôle S2 commande les interrupteurs M et SBp1.

De façon similaire, la deuxième structure qui fournit la tension de sortie négative Vs- entre les bornes Outn et Out comprend :
- un premier interrupteur commandé SBn0, dont une borne est connectée au noeud d'entrée correspondant N2 de la structure, et une paire d'interrupteurs en série SBn1, SHn1, connectée en entrée à l'autre borne B1 du premier interrupteur SBn0 et en sortie à la borne de sortie Outn non reliée à la masse électrique, et
- une capacité élémentaire Cn connectée en série entre le point milieu B2 entre les deux interrupteurs de la paire SBn1, SHn1 et le noeud d'entrée N2 de la structure ; et une capacité élémentaire de même valeur Cn connectée en parallèle sur cette paire SBn1, SHn1, c'est à dire entre la borne de sortie Outn non reliée à la masse électrique et la borne B1 du premier interrupteur SBn0 ;
- le signal de contrôle S1 commande l'interrupteur SHn1 et le signal de contrôle S2 commande les interrupteurs M, SBn0 et SBn1.

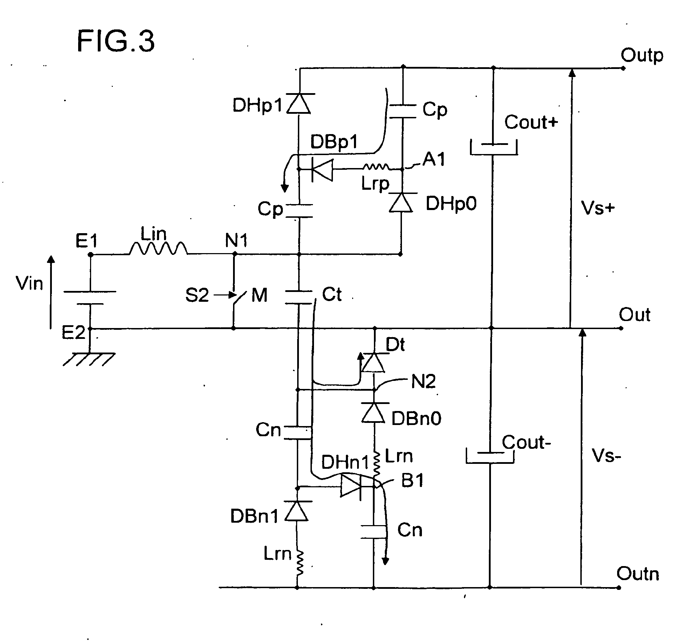

Les interrupteurs SBpi, SHpi, SBni, Shni peuvent être avantageusement réalisées par des diodes connectées en direct DBpi, DHpi, DBni, DHni, comme illustrées sur la figure 3. Seul l'interrupteur M de l'étage inductif reste. Cela simplifie la connexion, et permet de n'utiliser qu'un seul signal de contrôle S2, pour mettre cet interrupteur alternativement à l'état ouvert et passant suivant le rapport cyclique α=Ton/Ton+Toff.

Le fonctionnement du convertisseur est tel que l'on a simultanément un circuit résonant dans une structure, tandis que dans l'autre structure, on charge les capacités Cp ou Cn en parallèle. Le fonctionnement de chaque structure alterne en fonction de l'état alternativement ouvert et fermé de l'interrupteur M. Chaque circuit résonant forme un circuit série comprenant les capacités, Cp ou Cn, et l'interrupteur ou la diode qui les connecte en série DBp1 ou DHn1, entre le point d'entrée de la structure considérée N1 ou N2 et la sortie non reliée à la masse (figure 3).

Dans les deux structures, chaque paire peut comprendre en outre, de manière avantageuse, une inductance de récupération, comme vu en relation avec la présentation de l'état de l'art en référence aux figures 1a et 1b. Sur les figures ont prévoit ainsi des inductances Lrp et Lrn. Ces inductances de récupération permettent d'améliorer le rendement du convertisseur bi-tension, comme détaillé dans la présentation de l'état de l'art en référence au brevet français cité. Dans la première structure, une inductance Lrp est placée sur le chemin de connexion en série des deux capacités élémentaires Cp. Dans la deuxième structure, une inductance Lrn est placée sur chacun des chemins de charge en parallèle des deux capacités élémentaires Cn.

Le fonctionnement du convertisseur est de manière plus détaillée le suivant :
- la tension en N1 varie entre 0 et ½Vs+ . la tension est égale à 0 quand l'interrupteur M est commandé à l'état fermé ; et à ½Vs+ quand l'interrupteur M est commandé à l'état ouvert. La tension aux bornes de chaque capacité est 1/2Vs+. Aux bornes du condensateur Ct de l'étage translateur de tension, la tension est continue. Ainsi, la tension en N2 varie entre -½ Vs (quand N1 est à 0) et 0 (quand N1 est à ½Vs).

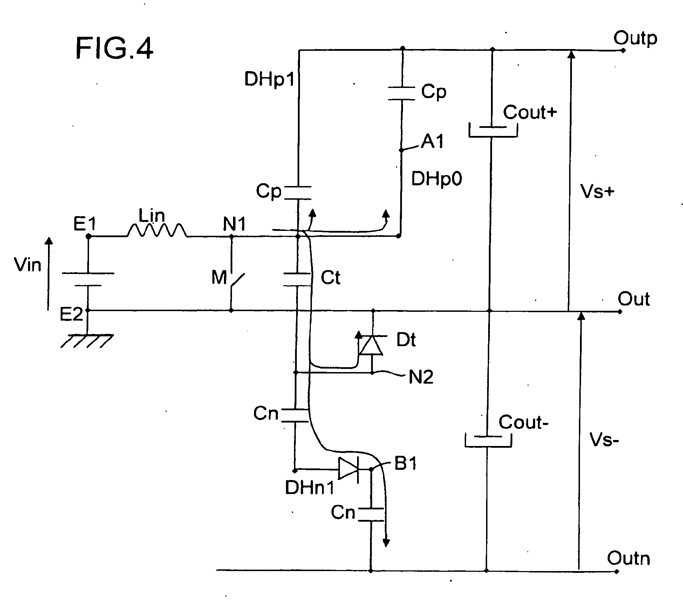

Quand l'interrupteur M est commandé à l'état ouvert, N1 passe à ½Vs+. Le courant dans l'inductance Lin se répartit au noeud N1 en deux : une partie entre dans la structure "positive", et permet la charge par Cp, SHp1 (ou DHp1) et SHp0 (ou DHp0), Cp. L'autre passe par Ct et décharge le circuit résonnant Ct, Cn, SHn1 (ou DHn1), Cn et repasse en partie dans la diode Dt. Le schéma électrique équivalent pour le cas où les transistors des structures sont des diodes, comme vu à la figure 3 est illustré sur la figure 4.

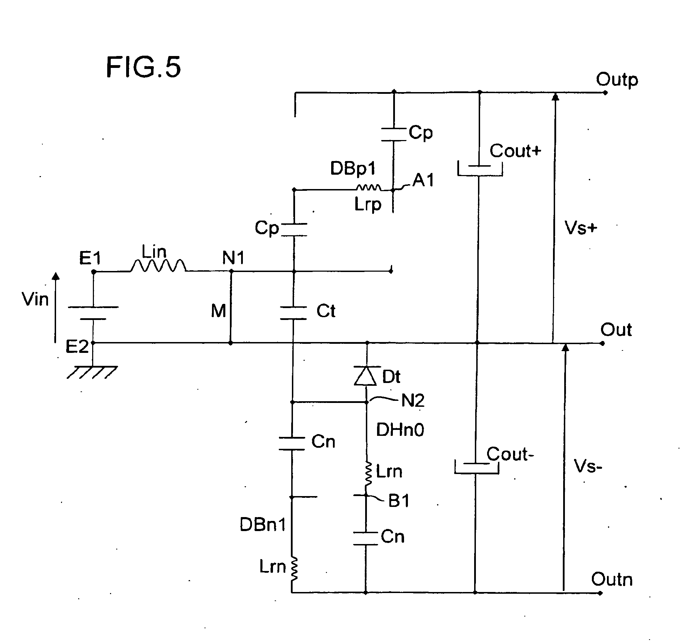

Quand l'interrupteur est commandé à l'état fermé, N1 repasse à zéro : on décharge le circuit résonnant Cp, Sbp1 (ou Dbp1), Cp de la structure positive, et on charge dans la deuxième structure par Cn, SHn0 (ou DHn0), Ct et SBn1 (ou DBn1), Cn, Ct. Le schéma électrique équivalent est illustré sur la figure 5, pour le cas où les transistors des deux structures sont des diodes (figure 3).

On a une égale répartition du courant dans les différentes chaînes qui sont symétriques.

Au final, on obtient en sortie des tensions symétriques : Vs+=-Vs-.

On notera que dans le cas avantageux, et comme illustré, où des inductances de récupération Lrn, Lrp, sont prévues, il s'agit en pratique d'inductances de valeurs très petites, qui ont juste comme fonction d'assurer un rééquilibrage énergétique sans pertes dans les différentes capacités.

Le condensateur Ct est en pratique dimensionné par rapport à la structure négative, en fonction du nombre kₙ de paires d'interrupteurs supplémentaires : Ct≥ kₙ.Cn. Dans l'exemple de la figure 2, ce nombre kₙ est égal à 1 et Ct est choisi supérieur ou égal à une capacité élémentaire Cn.

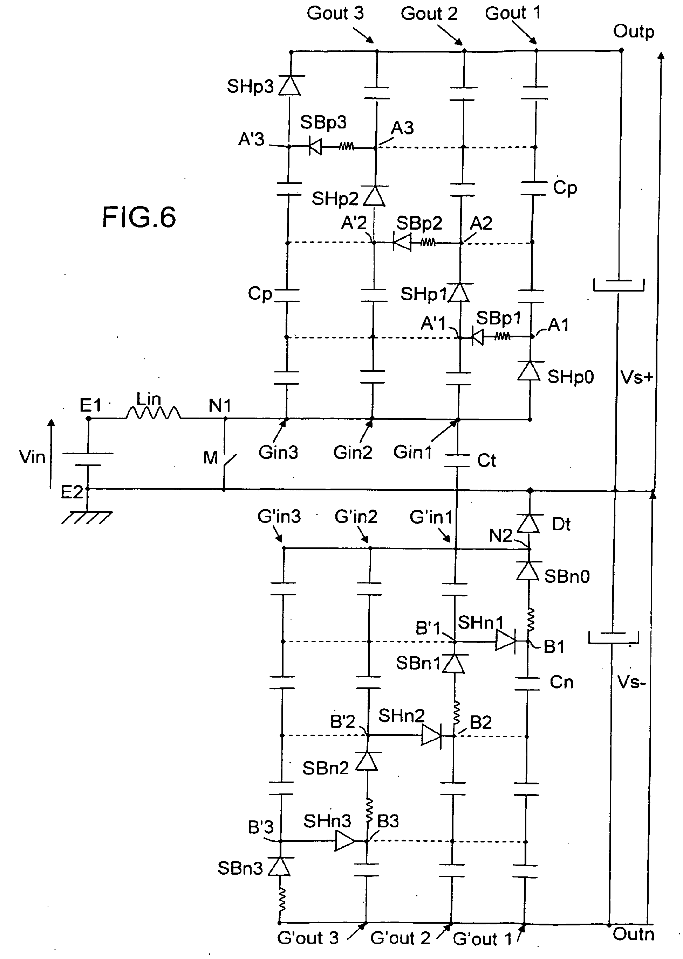

La figure 6 illustre une généralisation d'un convertisseur bi-tension selon l'invention, à plusieurs paires d'interrupteurs (des diodes dans l'exemple) dans chaque structure d'élévation de tension, pour former avec des groupes de capacités d'entrée et de sortie associés, autant de cellules d'élévation de tension.

La structure positive qui fournit en sortie une tension Vs+ positive entre les bornes Outp et Out, est connectée au noeud d'entrée N1. Elle comprend :
- un premier interrupteur commandé SHp0, connecté entre le noeud d'entrée correspondant N1, et un noeud A1 ;
- un ensemble série de kₚ paires d'interrupteurs en série (SBpi, SHpi), kₚ entier supérieur ou égal à 1. Cet ensemble est connecté entre le noeud A1 et la borne de sortie Outp non reliée à la masse électrique ;
- kp+1 condensateurs par paire, répartis en un groupe de condensateur(s) d'entrée Gini, et un groupe de condensateur(s) de sortie Gouti, et attachés à chaque paire d'interrupteurs de rang i dans l'ensemble série. Plus précisément, la paire connectée au noeud A1 est la paire de rang 1 par convention ; le groupe d'entrée comprend i capacités élémentaires Cp de même valeur connectées en série entre le point milieu A'i entre les deux interrupteurs de la paire considérée de rang i et le noeud d'entrée N1 de la structure ; et le groupe de sortie comprend (kₚ+1 )-i capacités élémentaires de même valeur Cp connectées en série entre le noeud de connexion Ai de la paire considérée de rang i avec la paire de rang i+1 suivante, et la borne de sortie Outp. On a ainsi, attachés à la première paire (SBp1, SHp1), de rang i=1 avec la convention adoptée, un groupe d'entrée Gin1 comprenant 1 capacité élémentaire Cp connecté entre A'1 et N1, et un groupe de sortie Gout1 comprenant 3 capacités élémentaires Cp connecté entre A1 et Outp; à la deuxième paire (SBp2, SHp2), de rang i=2, un groupe d'entrée Gin2 comprenant 2 capacités élémentaires Cp connecté entre A'2 et N1 et un groupe de sortie Gout2 comprenant 2 capacités élémentaires Cp connecté entre A2 et Outp ; à la troisième paire (SBp3, SHp3), de rang i=3, un groupe d'entrée Gin3 comprenant 3 capacités élémentaires Cp connecté entre A'3 et N1 et un groupe de sortie Gout3 comprenant 1 capacité élémentaire Cp connecté entre A3 et Outp.

La structure négative qui fournit en sortie une tension Vs-négative entre les bornes Outn et Out, est connectée au noeud d'entrée N2. Elle comprend de façon duale :
- un premier interrupteur commandé SBn0, connecté entre un noeud B1 et le noeud d'entrée correspondant N2 ;
- un ensemble série de kₙ paires d'interrupteurs en série (SBni, SHni), kₙ entier supérieur ou égal à 1 connecté entre la borne de sortie non reliée à la masse Outn et le noeud B1 ;
- kₙ+1 condensateurs associés à chaque paire et répartis en un groupe de condensateur(s) d'entrée G'inj, et un groupe de condensateur(s) de sortie G'outj, attachés à chaque paire d'interrupteurs de rang j dans l'ensemble série, en prenant par convention j = 1 pour la première paire (SBn1, SHn1) connectée au noeud B1. Le groupe d'entrée G'inj comprend j capacités élémentaires Cn de même valeur connectées en série entre le point milieu B'j entre les deux interrupteurs de la paire considérée de rang j et le noeud d'entrée N2 de la structure ; et le groupe de sortie G'outj comprend (kₙ+1)-j capacités élémentaires Cn de même valeur connectées en série entre le noeud de connexion Bj de la paire considérée de rang j avec la paire de rang i+1 suivante, et la borne de sortie Outn.

Dans les deux structures, chaque paire comprend avantageusement une inductance de récupération Lrn pour la première structure, Lrp pour la deuxième, ce qui améliore le rendement du convertisseur bi-tension.

Les interrupteurs de chaque paire des deux structures sont simultanément l'un commandé à l'état passant (fermé) et l'autre à l'état ouvert. Tous les interrupteurs SHpi ou SHni sont commandés par le même signal de commande S1 et tous les interrupteurs SBpi et SBni, et l'interrupteur M de l'étage inductif sont commandés par le même signal de commande S2, les signaux de commande S1 et S2 étant complémentaires, comme expliqué en relation avec la figure 2.

Dans un mode de réalisation pratique, et comme illustré, les interrupteurs SHpi, SHni, SBpi et SBni sont réalisés par des diodes connectées en direct, comme déjà vu en relation avec la figure 3. On a alors une unique ligne de signal de commande S2 sur l'interrupteur M de l'étage inductif, ce qui simplifie la connectique.

Dans la structure positive, le fonctionnement est comme suit:
lorsque l'interrupteur M est fermé pendant un temps Ton, les capacités d'entrée de chaque paire se trouvent en série avec les capacités de sortie de cette paire. Lorsque l'interrupteur M est isolé (ouvert) pendant un temps Toff, les capacités d'entrée de chaque paire se trouvent connectées à la borne E1 à travers l'inductance d'entrée en parallèle avec les capacités de sortie de cette paire.

On a le fonctionnement dual sur la deuxième structure.

En pratique, le condensateur Ct de l'étage de translation de tension est dimensionné en fonction du nombre de capacités élémentaires de la deuxième structure : Ct ≥ kₙ.Cn, où kₙ est le nombre de paires de la structure.

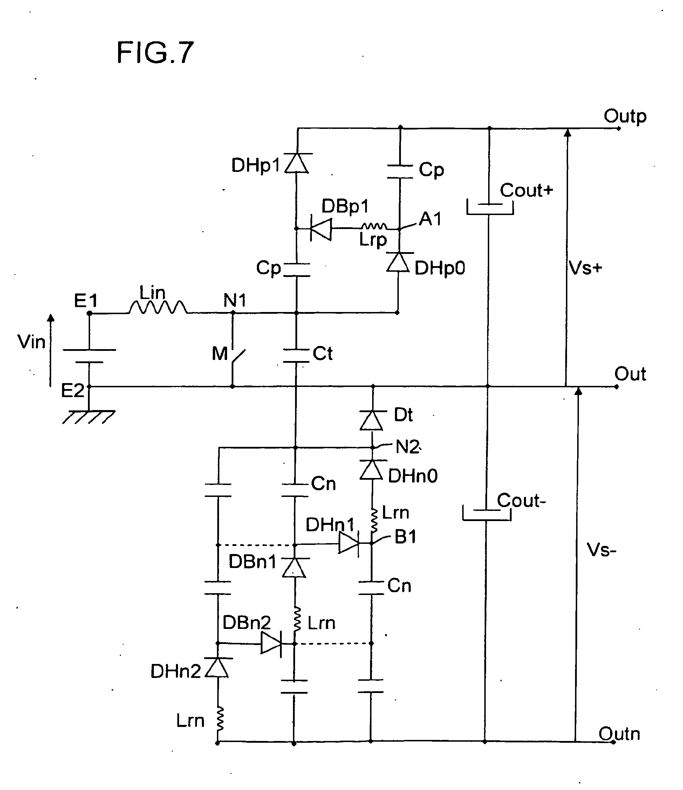

La figure 7 illustre le cas d'un convertisseur bi-tension non symétrique, c'est à dire où le nombre kp et kₙ de paires d'interrupteurs supplémentaires ne sont pas égaux. Dans l'exemple, kp=1 et kₙ=2.

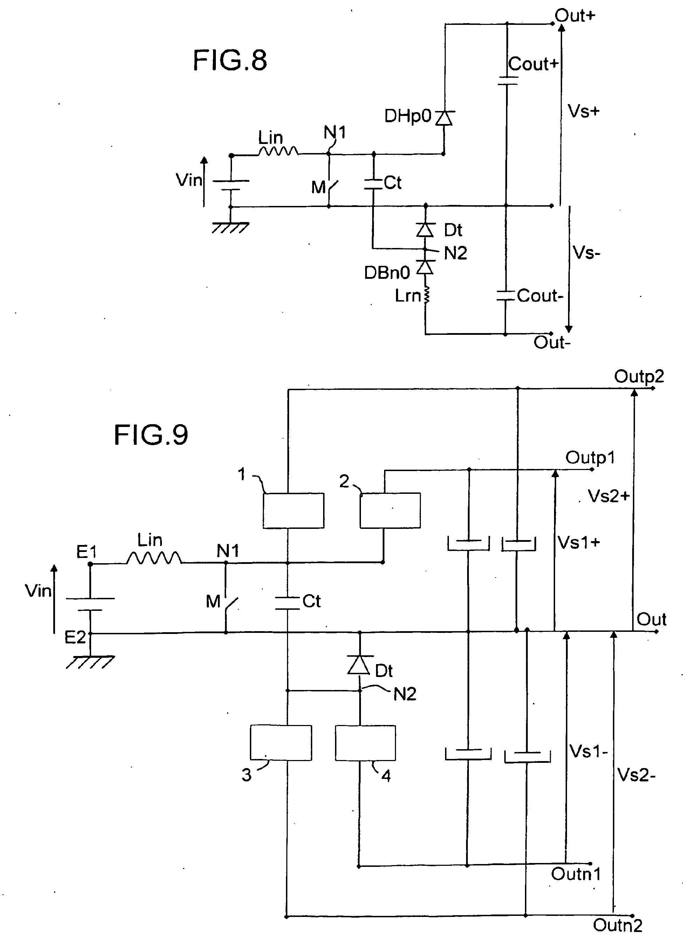

La figure 8 illustre le cas d'un convertisseur avec une cellule d'élévation du 1^{er} ordre, sans paires d'interrupteurs supplémentaires.

Dans ces figures, et comme mis en évidence sur la figure 6, la disposition physique des interrupteurs et capacités n'est pas sans importance. On montre qu'elle permet une réalisation pratique optimale en termes d'occupation de surface et de fiabilité de connexion. Dans cette disposition, les interrupteurs ou diodes successifs dans les structures sont disposées en marches d'escalier et les condensateurs sont alignés de part et d'autre par rapport à ces marches suivant un réseau triangulaire.

Il est par ailleurs possible de connecter les capacités ayant la même tension à leurs bornes, comme illustré en pointillé sur la figure 6.

On notera que l'invention ne se limite pas à une structure positive et une structure négative associées à un étage inductif et un étage de translation de niveau de tension. On peut connecter une pluralité de structures positives au noeud N1, pour fournir une pluralité de tensions positives Vs+₁,Vs+₂, ... , et/ou une pluralité de structures négatives au noeud N2, pour fournir une pluralité de tensions négatives V_{S+1}, V_{S+2}, ... , comme illustré schématiquement sur la figure 9. Dans une variante non illustrée, chaque structure négative a son propre étage de translation de niveau. Les limites de réalisation pratique sont essentiellement de nature technologique et dimensionnelle.

## Revendications

1. Convertisseur OC DC élévateur de tension comportant une première et une deuxième bornes d'entrée (E1. E2) pour recevoir une tension continue d'entrée (Vin), un étage inductif connecté entre les dites bornes d'entrée et comprenant une inductance (Lin) connectée en un noeud (N1) en série avec un interrupteur (M), et au moins une première et une deuxième structure d'élévation de tension, comprenant :
- au moins une première structure d'élévation pour fournir une tension de sortie positive (Vs+) entre une borne de sortie positive (Outp) et une borne de sortie (Out) reliée à la masse électrique, ladite première structure étant connectée entre un noeud d'entrée formé par ledit noeud (N1) de l'étage inductif et ladite borne de sortie positive (Outp); et comprenant un premier interrupteur (SHp0) connecté au dit noeud d'entrée, et kₚ paires d'interrupteurs (SBp1, SHp1) en série, connectées en série entre ledit premier interrupteur (SHp0) et la borne de sortie positive (Outp) ; kₚ entier supérieur ou égal à 1,
- au moins une deuxième structure d'élévation pour fournir une tension de sortie négative (Vs-) entre une borne de sortie négative (Outn) et ladite borne de sortie (Out) reliée à la masse électrique, ladite deuxième structure étant connectée entre un noeud d'entrée (N2) formé par ledit noeud d'un étage translateur de niveau et ladite borne de sortie négative (Outn), et comprenant un premier interrupteur (SBn0) connecté au dit noeud d'entrée, et kₙ paires d'interrupteurs en série (SBn1, SHn1) connectées en série entre ledit premier interrupteur et la borne de sortie négative (Outn), avec kₙ supérieur ou égal à 1, **caractérisé en ce qu'**il comprend en outre :
- le circuit translateur de niveau connecté entre ledit noeud de l'étage inductif (N1) et la borne d'entrée reliée à la masse électrique (E2) et comprenant une capacité (Ct) connectée en série en un noeud (N2) à une diode connectée en direct (Dt) ;
- kp+1, respectivement kₙ+1 condensateurs répartis entre un groupe de condensateur(s) d'entrée et un groupe de condensateur(s) de sortie, associé à chaque paire de la première structure, respectivement de la deuxième structure ;
- chaque paire d'interrupteurs desdites première et deuxième structure comprenant un premier interrupteur (SBp1 ou SHn1) et un deuxième interrupteur (SHp1 ou SBn1) en série, commandés simultanément et alternativement l'un à l'état ouvert et l'autre à l'état fermé, les premiers interrupteurs (SBp1 ou SHn1) étant tels qu'à l'état fermé ils mettent en série un groupe de capacité(s) d'entrée (Gin1) et un groupe de capacité(s) de sortie (Gout1) correspondants, et les deuxièmes interrupteurs (SHp1 ou SBn1) étant tels qu'à l'état fermé, les groupes de capacités d'entrée et de sortie sont connectés en parallèle entre le noeud d'entrée de la structure correspondante et la borne de tension positive ou négative correspondante;
- et l'interrupteur (M) de l'étage inductif, le dit premier interrupteur (SBn0) de la deuxième structure, les dits premiers interrupteurs des paires de la première structure et les dits deuxièmes interrupteurs des paires de la deuxième structure étant simultanément commandés (S2) alternativement à l'état ouvert et fermé, et ledit premier interrupteur (SHp0) de la première structure, lesdits deuxièmes interrupteurs (SHp1) des paires de la première structure et lesdits premiers interrupteurs (SHn1) des paires de la deuxième structure étant simultanément commandés dans l'état opposé.

2. Convertisseur selon la revendication 1, **caractérisé en ce que** les interrupteurs des structures sont des diodes connectées en direct.

3. Convertisseur selon la revendication 1 ou 2, **caractérisé en ce que** chaque paire comprend une inductance de récupération (Lm, Lrp).

4. Convertisseur selon l'une des revendications précédentes, **caractérisé en ce qu'**il comprend une pluralité de premières structures (1,2) et/ou de deuxièmes structures (3,4) connectées en parallèle entre le noeud d'entrée et la borne de tension correspondants, pour fournir une pluralité de tensions positive (Vs1+, Vs2+) et/ou négatives en sortie (Vs1-, Vs2-).

5. Convertisseur selon l'une quelconque des revendications 1 à 3, **caractérisé en ce qu'**il comprend une pluralité de circuits de translation de niveau, chacun associé à une deuxième structure respective.

6. Convertisseur selon l'une quelconque des revendications précédentes, **caractérisé en ce que** dans chaque structure, le premier interrupteur et les interrupteurs des paires sont disposés en série suivant un dessin en marches d'escalier, et les capacités élémentaires des groupes d'entrée et de sortie sont disposées de part et d'autre et alignées de part et d'autre par rapport aux dites marches selon un réseau triangulaire.

## Claims

1. A DC-DC voltage step-up converter including a first and a second input terminal (E1, E2) for receiving direct input voltage (Vin), an inductive stage connected between said input terminals and including an inductor (Lin) connected by a node (N1) in series with a switch (M), and at least one first and one second voltage step-up structure, comprising:
- at least one first voltage step-up structure to provide a positive output voltage (Vs+) between a positive output terminal (Outp) and an output terminal (Out) connected to the electric mass, said first structure being connected between an input node formed by said node (N1) of the inductive stage and said positive output terminal (Outp); and comprising a first switch (SHp0) connected to said input node, and kₚ pairs of in-series switches (SBp1 SHp1), which are connected in-series between said first switch (SHp0) and the positive output terminal (Outp); kₚ being an integer greater than or equal to 1,
- at least one second voltage step-up structure to provide a negative output voltage (Vs-) between a negative output terminal (Outn) and said output terminal (Out) connected to the electric mass, said second structure being connected between an input node (N2) formed by said node of a voltage level conversion step and said negative output terminal (Outn); and comprising a first switch (SBn0) connected to said input node, and kₙ pairs of in-series switches (SBn1 SHn1), which are connected in-series between said first switch and the negative output terminal (Outn); kₙ being an integer greater than or equal to 1,
**characterised in that** it further comprises:
- the voltage level converter circuit connected between said node of the inductive stage (N1) and the input terminal connected to the electric mass (E2) and including a capacitor (Ct) connected in-series by a node (N2) to a directly connected diode (Dt);
- kₚ+1 and, respectively, kₙ+1, capacitors distributed between a set of input capacitor(s) and a set of output capacitor(s), associated to each pair of the first structure, and of the second structure, respectively;
- each pair of switches of said first and second structures including a first switch (SBp1 or SHn1) and a second switch (SHp1 or SBn1) in-series, simultaneously and alternately controlled one in an open state and the other in a closed state, the first switches (SBp1 or SHn1) being such that in the closed state they connect a set of input capacitor(s) (Gin1) and a set of corresponding output capacitor(s) (Gout1) in series, and the second switches (SHp1 or SBn1) being such that in the closed state the sets of input and output capacitors are connected in parallel between the input node of the corresponding structure and the corresponding positive or negative voltage terminal;
- and the switch (M) of the inductive stage, said first switch (SBn0) of the second structure, said first switches of the pairs of the first structure and said second switches of the pairs of the second structure being simultaneously controlled (S2) alternately in the open and closed state, and said first switch (SHp0) of the first structure, said second switches (SHp1) of the pairs of the first structure and said first switches (SHn1) of the pairs of the second structure being simultaneously controlled in the opposing state.

2. The converter according to claim 1, **characterised in that** the switches in the structures are directly connected diodes.

3. The converter according to claim 1 or 2, **characterised in that** each pair includes a recovery inductor (Lrn, Lrp).

4. The converter according to any one of the previous claims, **characterised in that** it includes a plurality of first structures (1, 2) and/or second structures (3, 4) connected in parallel between the input node and the corresponding voltage terminal in order to provide a plurality of positive (Vs1+, Vs2+) and/or negative output (Vs1-, Vs2-) voltages.

5. The converter according to any one of claims 1 to 3, **characterised in that** it includes a plurality of voltage level conversion circuits, each being associated with a respective second structure.

6. The converter according to any one of the previous claims, **characterised in that** in each structure, the first switch and the switches for the pairs are disposed in-series in accordance with a ladder diagram, and the elementary capacitors of the input and output sets are disposed either side and aligned either side relative to said steps in a triangular network.

## Patentansprüche

1. DC-DC-Spannungsaufwärtswandler, der Folgendes umfasst: einen ersten und einen zweiten Eingangsanschluss (E1, E2) zum Empfangen einer Eingangsgleichspannung (Vin), eine Induktionsstufe, die zwischen den Eingangsanschlüssen geschaltet ist und eine Induktivität (Lin) aufweist, die über einen Knoten (N1) in Reihe mit einem Schalter (M) geschaltet ist, und wenigstens eine erste und eine zweite Spannungserhöhungsstruktur, umfassend:
- wenigstens eine erste Erhöhungsstruktur zum Anlegen einer positiven Ausgangsspannung (Vs+) zwischen einen positiven Ausgangsanschluss (Outp) und einen Ausgangsanschluss (Out), der mit elektrischer Masse verbunden ist, wobei die erste Struktur zwischen einem von dem Knoten (N1) der Induktionsstufe gebildeten Eingangsknoten und dem positiven Ausgangsanschluss (Outp) geschaltet ist; und mit einem ersten Schalter (SHp0), der mit dem Eingangsknoten verbunden ist, and kₚ seriellen Paaren von Schaltern (SBp1, SHp1), die in Reihe zwischen dem ersten Schalter (SHp0) und dem positiven Ausgangsanschluss (Outp) geschaltet sind; wobei kₚ eine ganze Zahl gleich oder größer als 1 ist,
- wenigstens eine zweite Erhöhungsstruktur zum Anlegen einer negativen Ausgangsspannung (Vs-) zwischen einen negativen Ausgangsanschluss (Outp) und den Ausgangsanschluss (Out), der mit elektrischer Masse verbunden ist, wobei die zweite Struktur zwischen einem von dem Knoten einer Pegelwandlungsstufe gebildeten Eingangsknoten (N2) und dem negativen Ausgangsanschluss (Outn) geschaltet ist; und mit einem ersten Schalter (SBn0), der mit dem Eingangsknoten verbunden ist, and kₚ seriellen Paaren von Schaltern (SBn1, SHn1), die in Reihe zwischen dem ersten Schalter und dem negativen Ausgangsanschluss (Outn) geschaltet sind; wobei kₙ eine ganze Zahl gleich oder größer als 1 ist,
**dadurch gekennzeichnet, dass** er ferner Folgendes umfasst:
- die Pegelwandlungsschaltung, die zwischen dem Knoten der Induktionsstufe (N1) und dem Eingangsanschluss geschaltet ist, der mit elektrischer Masse (E2) verbunden ist und einen Kondensator (Ct) umfasst, der in Reihe über einen Knoten (N2) mit einer direkt geschalteten Diode (Dt) geschaltet ist;
- kₚ+1 bzw. kₙ+1 Kondensatoren, die zwischen einem Satz Eingangskondensator(en) und einem Satz Ausgangskondensator(en) verteilt sind, die mit jedem Paar der ersten Struktur bzw. der zweiten Struktur assoziiert sind;
- wobei jedes Schalterpaar der ersten und der zweiten Struktur einen ersten Schalter (SBp1 oder SHn1) und einen zweiten Schalter (SHp1 oder SBn1) in Reihe aufweist, wobei gleichzeitig und abwechselnd der eine in den offenen, der andere in den geschlossenen Zustand gesteuert wird, wobei die ersten Schalter (SBp1 oder SHn1) derart sind, dass sie im geschlossenen Zustand einen Satz Eingangskondensator(en) (Gin1) und einen entsprechenden Satz Ausgangskondensator(en) (Gout1) in Reihe schalten, und wobei die zweiten Schalter (SHp1 oder SBn1) derart sind, dass die Sätze von Ein- und Ausgangskondensatoren im geschlossenen Zustand parallel zwischen dem Eingangsknoten der entsprechenden Struktur und dem entsprechenden positiven oder negativen Spannungsanschluss geschaltet sind;
- und der Schalter (M) der Induktionsstufe, der erste Schalter (SBn0) der zweiten Struktur, die ersten Schalter der Paare der ersten Struktur und die zweiten Schalter der Paare der zweiten Struktur gleichzeitig abwechselnd in den offenen und den geschlossenen Zustand gesteuert (S2) werden und der erste Schalter (SHp0) der ersten Struktur, die zweiten Schalter (SHp1) der Paare der ersten Struktur und die ersten Schalter (SHn1) der Paare der zweiten Struktur gleichzeitig in den entgegengesetzten Zustand gesteuert werden.

2. Wandler nach Anspruch 1, **dadurch gekennzeichnet, dass** die Schalter in den Strukturen direkt geschaltete Dioden sind.

3. Wandler nach Anspruch 1 oder 2, **dadurch gekennzeichnet, dass** jedes Paar eine Wiederherstellungsinduktivität (Lrn, Lrp) aufweist.

4. Wandler nach einem der vorherigen Ansprüche, **dadurch gekennzeichnet, dass** er mehrere erste Strukturen (1, 2) und/oder zweite Strukturen (3, 4) umfasst, die parallel zwischen dem Eingangsknoten und dem entsprechenden Spannungsanschluss geschaltet sind, um mehrere positive (Vs1+, Vs2+) und/oder negative (Vs1-, Vs2-) Ausgangsspannungen bereitzustellen.

5. Wandler nach einem der Ansprüche 1 bis 3, **dadurch gekennzeichnet, dass** er mehrere Pegelwandlungsschaltungen beinhaltet, die jeweils mit einer jeweiligen zweiten Struktur assoziiert sind.

6. Wandler nach einem der vorherigen Ansprüche, **dadurch gekennzeichnet, dass** in jeder Struktur der erste Schalter und die Schalter der Paare in Reihe gemäß einem Leiterdiagramm angeordnet sind, und die Elementarkondensatoren der Ein- und Ausgangssätze auf beiden Seiten angeordnet und auf beiden Seiten relativ zu den Stufen in einem dreieckigen Netzwerk ausgerichtet sind.
